# EUROPEAN PATENT SPECIFICATION

(11) **EP 2 664 440 B1**
(45) Date of publication and mention of the grant of the patent: **25.11.2020**
(21) Application number: 13168020.9
(22) Date of filing: 16.05.2013
(51) Int. Cl.: B29C 45/84, B29C 45/76

(54) **Injection molding machine**
Spritzgießmaschine
Machine de moulage à injection

(30) Priority: 18.05.2012 JP 2012115061
(43) Date of publication of application: 20.11.2013
(73) Proprietor: SUMITOMO HEAVY INDUSTRIES, LTD., Tokyo 141-6025 (JP)
(72) Inventor: OKADA, Noritaka, Kanagawa 237-8555 (JP)
(74) Representative: Hoffmann Eitle

(56) References cited:
- JP-A- S62 208 920
- JP-A- 2004 154 961
- US-A1- 2003 228 386

## Description

### BACKGROUND

### 1. Technical Field

The disclosures herein generally relate to an injection molding machine provided with a driving section to drive a motor.

### 2. Description of Related Art

An injection molding machine provided with a driving section to drive a motor is disclosed, for example, in Japanese Laid-open Patent Application No. 2004-154961.

US 2003/0228386 A1 refers to a hybrid power supply type injection moulding machine system having a first electric power supply unit for supplying the electric power from a commercial power source, and a second electric power supply unit having an electric power accumulation unit dedicated to said motor-driven injection moulding machine. A switching device is provided for switching over a supply of the electric power given through a control device.

### SUMMARY

According to the present invention, an injection molding machine includes the features of claim 1.

### BRIEF DESCRIPTION OF THE DRAWINGS

Figure 1 is a generic configuration diagram of an injection molding machine according to an embodiment of the present invention; and
Figure 2 is a generic configuration diagram of an injection molding machine according to another embodiment of the present invention.

### DETAILED DESCRIPTION

Conventionality, it is difficult to stop a motor or a driving section to drive the motor in an injection molding machine even if an event occurs that requires stoppage of the motor or the driving section.

According to at least one embodiment of the present invention, it is possible to provide an injection molding machine provided with a motor or a driving section to drive the motor that can be stopped promptly.

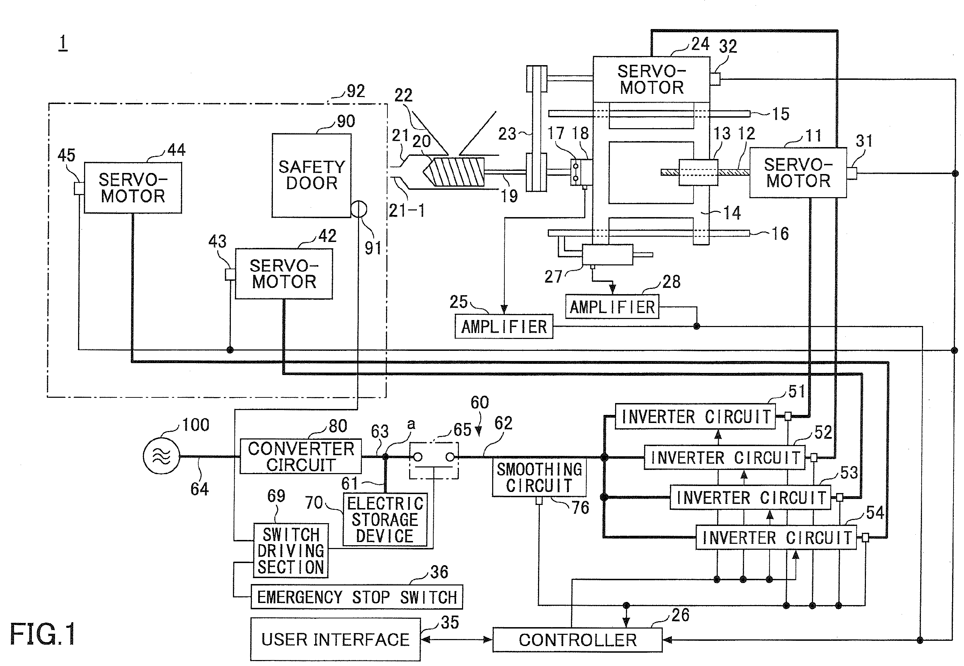

Figure 1 is a generic configuration diagram of an injection molding machine according to a first embodiment of the present invention.

An injection molding machine 1 is an electric-powered injection molding machine provided with a servomotor 11 for injection according to the present embodiment. Rotational movement generated by the servomotor 11 for injection is transmitted to a ball screw 12. Rotational movement of the ball screw 12 drives a nut 13 forward/backward, which is fixed on a pressure plate 14. The pressure plate 14 can move along guide bars 15 and 16 fixed on a base frame (not shown). Forward/backward movement of the pressure plate 14 is transmitted to a screw 20 via bearings 17, a load cell 18, and an injection shaft 19. The screw 20 is disposed in a heating cylinder 21 so that the screw 20 can rotate and move in the shaft direction. Behind the screw 20 in the heating cylinder 21, a hopper 22 for supplying resin is disposed. To the injection shaft 19, rotational movement of a servomotor 24 for rotating the screw 20 is transmitted via connection members such as a belt, a pulley, and the like. Namely, the screw 20 is rotated by rotational movement of the injection shaft 19, which is driven by the servomotor 24.

At a plasticizing process, molten resin is accumulated at a nozzle 21-1 in the heating cylinder 21, or in front of the screw 20 when the screw 20 rotates and moves backward. At an injection process, molding is carried out by filling the molten resin accumulated in front of the screw 20 into a mold, then applying pressure to the filled resin. At this moment, the load cell 18 detects a repulsive force generated when applying pressure to the filled resin. Namely, pressure applied to the resin in front of the screw 20 is detected. The detected pressure is amplified by a load cell amplifier 25, to be received by a controller 26 as an input. At a hold pressure process, a predetermined pressure is kept in the mold filled with the resin.

The pressure plate 14 is attached with a position detector 27 to detect the amount of movement of the screw 20. A detected signal by the position detector 27 is amplified by an amplifier 28, to be received by the controller 26 as an input. The detected signal may be used for detecting the moving speed of the screw 20 as well.

The servomotors 11 and 24 are provided with encoders 31 and 32, respectively, to detect the number of rotations. The numbers of rotations detected by the encoders 31 and 32 are received by the controller 26 as inputs.

A servomotor 42 is used for opening/closing the mold. A servomotor 44 is used for ejection of a molding product (ejector). The servomotor 42 can, for example, open/close a movable platen by driving a mold clamping device. By opening/closing the movable platen, a mold closing process to close the mold, a mold opening process to open the mold, and a mold clamping process to clamp the mold are executed. The servomotor 44 can move an ejector rod (not shown), for example, with a ball screw mechanism. With movement of the ejector rod, a molding product ejection process is executed to eject a molding product. The servomotors 42 and 44 are provided with encoders 43 and 45, respectively, to detect the number of rotations. The numbers of rotations detected by the encoders 43 and 45 are received by the controller 26 as inputs.

The controller 26 is configured with a microcomputer as main parts. The controller 26 includes, for example, a CPU, a ROM to store a control program, a readable/writable RAM to store a calculation result, a timer, a counter, an input interface, an output interface, etc.

The controller 26 sends a command to an inverter circuit (motor driving circuit) with a current (or a torque) during one of multiple processes executed when the injection molding machine 1 operates. The inverter circuits are driving sections for driving the servomotors 11, 24, 42, and 44 in response to the command. For example, the controller 26 implements the plasticizing process by controlling the number of rotations of the servomotor 24 with the inverter circuit 52. Also, the controller 26 implements the injection process and hold pressure process by controlling the number of rotations of the servomotor 11 with the inverter circuit 51. Similarly, the controller 26 implements the mold opening/closing processes by controlling the number of rotations of the servomotor 42 with the inverter circuit 53. And, the controller 26 implements the molding product ejection process by controlling the number of rotations of the servomotor 44 with the inverter circuit 54.

A user interface 35 provides an input setting section with which molding conditions can be set for the processes such as the mold opening/closing processes and the injection process. In addition, the user interface 35 also provides an input section to receive a command from a user, and an output section (for example, a display section) to output relevant information to the user.

A cycle of the processes for producing a molding product by the injection molding machine 1 typically includes the following processes:
the mold closing process to close the mold;
the mold clamping process to clamp the mold;
a nozzle touching process to push the nozzle 21-1 against a sprue (not shown) of the mold;
the injection process to inject a melted material accumulated in front of the screw 20 into a mold cavity (not shown) by advancing the screw 20 in the heating cylinder 21;
the hold pressure process to apply pressure to the material for a while to prevent a bubble or a shrinkage hole from being generated;
the plasticizing process to melt and accumulate resin for the next cycle in the front of the heating cylinder 21 by rotating the screw 20 during the time for cooling and hardening of the melted material filled in the mold cavity for the current cycle;
the mold opening process to open the mold before ejecting the hardened molding product; and
the molding product ejection process to eject the molding product by an ejection pin (not shown) provided in the mold.

The injection molding machine 1 supplies electric power to a converter circuit 80 and the servomotors 11, 24, 42, and 44 based on an AC power supplied from an electric power source 100. The injection molding machine 1 may have a regenerative function to feed regenerative electric power generated at the servomotors 11, 24, 42, and 44 back to the electric power source 100 via the inverter circuits 51, 52, 53, and 54 and the converter circuit 80. With such a regenerative function, electric energy can be saved in the injection molding machine 1.

The electric power source 100 is provided outside of the injection molding machine 1, for example, as an AC power supply of plant facilities. Specifically, the electric power source 100 may come from, for example, a commercial power supply outputting a sine-wave AC power at a certain frequency (for example, 50 Hz or 60 Hz) with a predetermined voltage (for example, 200 V or 400 V).

The inverter circuits 51, 52, 53, and 54 are driving sections to drive the servomotors 11, 24, 42, and 44, respectively, based on an AC power converted from a DC power supplied by the converter circuit 80 via a DC link 60. The inverter circuits 51, 52, 53, and 54 convert, for example, a direct current supplied by the converter circuit 80 via a DC link 60 into three-phase alternating currents.

The inverter circuits 51, 52, 53, and 54 supply regenerated DC power converted from regenerative AC power generated by the servomotors 11, 24, 42, and 44, respectively, to an electric storage device 70 of the DC link 60 and the converter circuit 80. The inverter circuits 51, 52, 53, and 54 convert, for example, three-phase alternating currents supplied by the servomotors 11, 24, 42, and 44 into a direct current.

The inverter circuits 51, 52, 53, and 54 are connected in parallel with a DC power line 62 of the DC link 60. If the DC power and three-phase DC power are converted bidirectionally, the inverter circuits 51, 52, 53, and 54 may preferably include, for example, a three-phase bridge circuit including six DC power transistors.

The DC link 60 is a DC power source passing section disposed between a DC output of the converter circuit 80 and a DC input of the inverter circuits 51, 52, 53, and 54. The DC link 60 includes DC power lines 61, 62, and 63, a smoothing circuit 76, the electric storage device 70, and a switch 65.

The DC power lines 61, 62, and 63 are transmission paths for a direct current flowing between the converter circuit 80, the inverter circuits 51, 52, 53, and 54 and the electric storage device 70. Each of the DC power lines 61, 62, and 63 is configured with, for example, a pair of power lines, a power feed line and a reference line such as a ground line.

The smoothing circuit 76 is for smoothing DC voltage of the DC power lines 61, 62, and 63. The smoothing circuit 76 includes, for example, an electrolytic capacitor as a voltage smoothing capacitor. DC link voltage Vdc at the DC power lines 61, 62, and 63 of DC link 60 corresponds to, for example, a voltage at both ends of the voltage smoothing capacitor of the smoothing circuit 76. A detected value of the DC link voltage Vdc is received by the controller 26 as an input.

The electric storage device 70 is an electric storage section to store electric power sufficient enough to have the servomotors 11, 24, 42, and 44 make normal rotational movement. The electric storage capacity is sufficiently greater than the electric storage capacity of the smoothing circuit 76 which is not enough to have the servomotors 11, 24, 42, and 44 make normal rotational movement for a long time. The electric storage device 70 includes, for example, a battery, an electric double-layer capacitor, and the like. By adopting the electric double-layer capacitor, it is possible to secure a capacity for charging with regenerative electric power as well as to prevent the electric storage device 70 from becoming larger.

The injection molding machine 1 has a function to charge the electric storage device 70 with regenerative energy generated by the servomotors 11, 24, 42, and 44 via the inverter circuits 51, 52, 53, and 54 and the DC link 60. In addition, the injection molding machine 1 has a function to supply energy released from the electric storage device 70 to the servomotors 11, 24, 42, and 44 via the DC link 60 and the inverter circuits 51, 52, 53, and 54. With such functions, electric energy can be saved in the injection molding machine 1 because the amount of electricity supplied by the electric power source 100 can be reduced.

The switch 65 is a member for selectively cutting off or conducting a current at a power feeding path from the electric storage device 70 to the inverter circuits 51, 52, 53, and 54 (the path including the DC power lines 61 and 62 in figure 1). By cutting off the power feeding path from the electric storage device 70 to the inverter circuits 51, 52, 53, and 54 with the switch 65 setting to off, power supplied from the electric storage device 70 to the inverter circuits 51, 52, 53, and 54 can be stopped. The switch 65 may be, specifically, a contactor, a semiconductor switching element such as a transistor, a relay, or the like.

The switch 65 cuts off the power feeding path from the electric storage device 70 to the inverter circuits 51, 52, 53, and 54 if an abnormal state is detected in which the motors 11, 24, 42, and 44 need to be stopped when making rotational movement. Alternatively, the switch 65 may cut off the power feeding path from the electric storage device 70 to the inverter circuits 51, 52, 53, and 54 if an abnormal state is detected in which the inverter circuits 51, 52, 53, and 54 need to stop switching driving operations being executed.

Configured as above, it is possible to cut off the power being fed to the inverter circuits 51, 52, 53, and 54, to promptly stop rotational movement of the motors 11, 24, 42, and 44, or switching driving operations of the inverter circuits 51, 52, 53, and 54. To stop an operation of a motor or an inverter circuit by restricting power supply to the inverter circuits 51, 52, 53, and 54, the electric storage device 70 could be discharged. The discharge of the electric storage device 70, however, takes a long time in general. By providing a cutoff section such as the switch 65, it is possible to restrict power supply to the inverter circuits 51, 52, 53, and 54 without discharging the electric storage device 70, hence it is possible to stop the motor or the inverter circuit faster than the case in which the electric storage device 70 is discharged. Also, the electric storage device 70 does not need to be renewedly charged because the electric storage device 70 is not discharged.

The switch 65 cuts off the DC power line 62, for example, when an operation is detected with which rotational movement of at least one of the servomotors 11, 24, 42, and 44 should be stopped. Alternatively, the switch 65 may cut off the DC power line 62, for example, when an operation is detected with which a switching driving operation of at least one of the inverter circuits 51, 52, 53, and 54 should be stopped. The DC power line 62 is the power feeding path between a connection point "a" of the converter circuit 80 and the electric storage device 70, and the inverter circuits 51, 52, 53, and 54.

By cutting off the DC power line 62, power supply is stopped not only from the electric storage device 70 to the inverter circuits 51, 52, 53, and 54, but also from the converter circuit 80 to the inverter circuits 51, 52, 53, and 54.

The converter circuit 80 is connected with the DC link 60 via the DC power line 63 at the connection point "a" positioned between the electric storage device 70 and the switch 65, which can supply power to the inverter circuits 51, 52, 53, and 54 via the DC link 60. The converter circuit 80 supplies DC power converted from AC power supplied from the electric power source 100 via an AC power line 64 to the electric storage device 70 of the DC link 60 and the inverter circuits 51, 52, 53, and 54. Alternatively, the converter circuit 80 may be a power-regeneration converter (power-regeneration device) which supplies AC power converted from DC power supplied by the inverter circuits 51, 52, 53, and 54 and the electric storage device 70 of the DC link 60.

The converter circuit 80 may be preferably, for example, a circuit including a diode bridge circuit configured with six diodes that converts AC power to DC power unidirectionally when a motor operates in powering mode. Alternatively, the converter circuit 80 may be a circuit, for example, including a three-phase bridge circuit (powering and regeneration section) configured with six power transistors that converts AC power and DC power bidirectionally when a motor operates in powering mode or in regenerative mode. The converter circuit 80 rectifies an alternating current flowing through the AC power line 64 into a direct current mainly by diodes connected in parallel to the power transistors configuring the three-phase bridge circuit when a motor operates in powering mode.

Furthermore, the converter circuit 80 may include a powering path and a regenerative path in parallel. For example, the powering path is inserted with a diode bridge circuit to convert AC power supplied by the AC power line 64 to DC power, whereas the regenerative path is inserted with a bridge circuit to convert DC power supplied by the DC link 60 to AC power.

The AC power line 64 is a power line between the electric power source 100 and the converter circuit 80 to transmit AC power between the electric power source 100 and the converter circuit 80. The AC power line 64 is configured with, for example, three-phase current paths; R, S, and T.

The injection molding machine 1 provides a safety door 90 as a blockage to prevent a user from touching a movable part driven by the servomotor (for example, the mold). The safety door 90 is a safety device disposed at, for example, a mold opening/closing mechanism 92 including a movable part such as the mold. A user can touch the movable part when the safety door 90 is opened, and cannot touch the movable part when the safety door 90 is closed. The safety door 90 may be opened/closed manually or automatically.

The switch driving section 69 is, for example, a driving circuit to output a signal driving the switch 65. The switch driving section 69 may be disposed inside of the controller 26 or outside.

If the switch driving section 69 is disposed outside of the controller 26, the switch driving section 69 can be made to be independent from the controller 26, hence the switch driving section 69 can be operated regardless of the state of the controller 26. For example, even if the controller 26 is in a state before start-up or in an abnormal state, the switch driving section 69 can be operated normally to drive the switch 65.

The switch driving section 69 cuts off the DC power line 62 with the switch 65, for example, if a state transition of the safety door 90 from a closed state to an open state is detected by a door state detecting section 91 during an operation of one of the servomotors 11, 24, 42, and 44, or the inverter circuits 51, 52, 53, and 54. With this mechanism, the operation of one of the servomotors 11, 24, 42, and 44, and the inverter circuits 51, 52, 53, and 54 can be stopped promptly even if a user opens the safety door 90 during the operation of one of the servomotors 11, 24, 42, and 44, or the inverter circuits 51, 52, 53, and 54.

The switch driving section 69 may also cut off the DC power line 62 with the switch 65, for example, if an operation on an emergency stop switch 36 is detected during an operation of one of the servomotors 11, 24, 42, and 44, or the inverter circuits 51, 52, 53, and 54. With this mechanism, the operation of one of the servomotors 11, 24, 42, and 44, and the inverter circuits 51, 52, 53, and 54 can be stopped promptly even if a user operates the emergency stop switch 36 during the operation of one of the servomotors 11, 24, 42, and 44, or the inverter circuits 51, 52, 53, and 54.

The emergency stop switch 36 is an emergency stop switch circuit to make the injection molding machine 1 transition to an emergency stop state in which an operation of the servomotors 11, 24, 42, and 44 and the inverter circuits 51, 52, 53, and 54 needs to be stopped urgently. The emergency stop switch 36 is disposed, for example, at the user interface 35, to be possibly operated by a user.

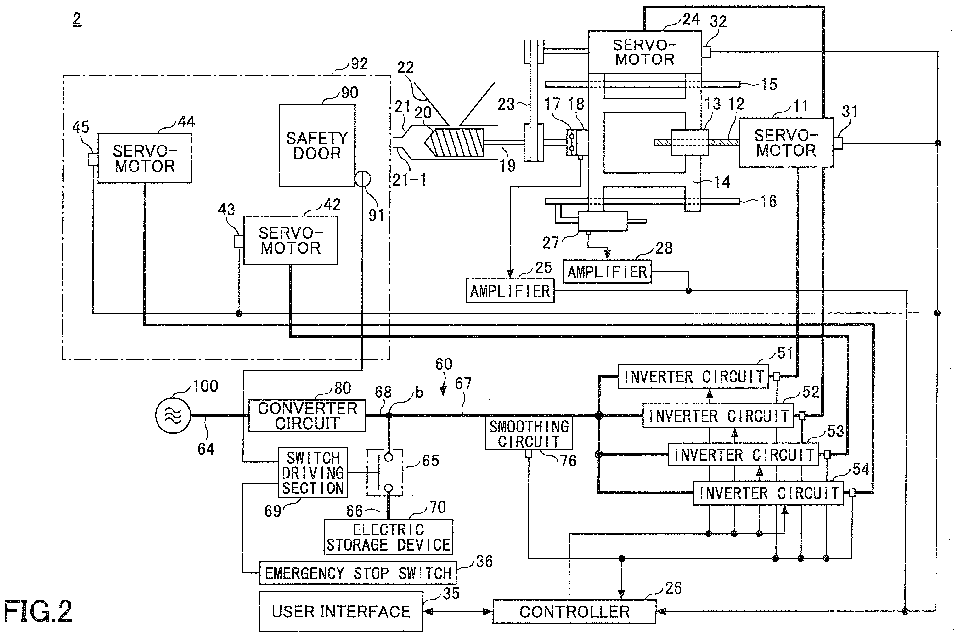

Figure 2 is a generic configuration diagram of an injection molding machine 2 according to a second embodiment of the present invention. Explanations on the same parts or operations as in the injection molding machine 1 are omitted in the following. The converter circuit 80 in figure 1 is connected with the DC link 60 via the DC power line 63 at the connection point "a" positioned between the electric storage device 70 and the switch 65. On the other hand, the converter circuit 80 in figure 2 is connected with the DC link 60 via the DC power line 68 at the connection point "b" positioned between the inverter circuits 51, 52, 53, and 54, and the switch 65.

The switch 65 in figure 2 is a member for selectively cutting off or conducting a current at a power feeding path from the electric storage device 70 to the inverter circuits 51, 52, 53, and 54 (the path including the DC power lines 66 and 67 in figure 2). The switch 65 cuts off the DC power lines 66 if a predetermined state is detected in which one of the motors 11, 24, 42, and 44 and the inverter circuits 51, 52, 53, and 54 needs to be stopped. The DC power line 66 is the power feeding path between the connection point "b" of the converter circuit 80 and the inverter circuits 51, 52, 53, and 54, and the electric storage device 70. By cutting off the DC power line 66, power supply is stopped from the electric storage device 70 to the inverter circuits 51, 52, 53, and 54.

In this case, the controller 26 also cuts off power supply from the converter circuit 80 to the inverter circuits 51, 52, 53, and 54 if a predetermined state is detected in which one of the motors 11, 24, 42, and 44, or the inverter circuits 51, 52, 53, and 54 needs to be stopped. To cut off power supply from the converter circuit 80 to the inverter circuits 51, 52, 53, and 54, for example, the operation of the converter circuit 80 may be stopped, or the AC power line 64 may be cut off, or the DC power line 68 may be cut off.

As above, the preferred embodiments of the present invention have been described. The present invention, however, is not limited to the embodiments described above, but various modifications, replacements, or combinations may be made without departing from the scope of the present invention.

For example, in figure 1, to limit an inrush current (charging current) flowing from the electric storage device 70 into the electrolytic capacitor of the smoothing circuit 76 at a timing when the switch 65 is set on, a current limiting resistor may be inserted between the electric storage device 70 and the smoothing circuit 76, for example, between the switch 65 and the smoothing circuit 76. Similarly, for example, in figure 2, to limit an inrush current (charging current) flowing from the electric storage device 70 into the electrolytic capacitor of the smoothing circuit 76 at a timing when the switch 65 is set on, a current limiting resistor may be inserted between the electric storage device 70 and the smoothing circuit 76, for example, between the switch 65 and the smoothing circuit 76. It is favorable to insert the current limiting resistor between the electric storage device 70 and the smoothing circuit 76 because not only the inrush current flowing from the electric storage device 70, but also an inrush current flowing from the converter circuit 80, can be limited.

If the current limiting resistor is to be inserted, it is favorable to connect a switch member with the current limiting resistor in parallel. By limiting the inrush current with setting the switch member off, then setting the switch member on, it is possible to detour the charging/recharging current flowing from/to the electric storage device 70, into the switch member.

Also, if a predetermined state is detected in which a specific one of the motors 11, 24, 42, and 44 needs to be stopped, or a specific one of the inverter circuits 51, 52, 53, and 54 that drives the specific motor needs to be stopped, the power feeding path to the specific inverter may be cut off. For example, in figure 1, the switch 65 may cut off the power feeding path between a connection point of the DC power line 62 and the inverter circuit 53, and the inverter circuit 53 in a state in which the servomotor 42 needs to be stopped.

Moreover, for example, the switch 65 may cut off the power feeding path if an opening operation of the safety door 90 and an operation of the emergency stop switch 36 are detected simultaneously.

Further, it should be understood that the invention is not limited to the above described embodiments, but may be modified into various forms on the basis of the scope of the invention defined in the appended claims.

## Claims

1. An injection molding machine (1, 2) comprising:
a motor (11, 24, 42, 44);
a driving section (51-54) to drive the motor;
a DC link (60), the DC link comprising an electric storage section (70) to store power to operate the motor; and
a cutoff section (65) to cut off a power feeding path from the electric storage section (70) to the driving section if the state is detected in which at least one of the motor and the driving section needs to be stopped, wherein the state is an opening state of a safety door (90) or the state is an emergency stop state.

2. The injection molding machine as claimed in claim 1,
wherein the cutoff section (65) cuts off the power feeding path if the state is detected while at least one of the motor and the driving section is operating.

3. The injection molding machine as claimed in claim 1 or 2,
wherein the electric storage section stores regenerative electric power generated at the motor via the driving section.

4. The injection molding machine as claimed in claim 1 to 3, further comprising:
a power feeding section to feed power to the driving section,
wherein the power feeding section is connected with the power feeding path at a position on a side of the electric storage section relative to the cutoff section (65).

5. The injection molding machine as claimed in claim 1 to 3, further comprising:
a power feeding section to feed power to the driving section,
wherein the power feeding section is connected with the power feeding path at a position on a side of the driving section (51-54) relative to the cutoff section, to stop supplying electric power if the state is detected.

## Patentansprüche

1. Spritzgießmaschine (1, 2), umfassend:
einen Motor (11, 24, 42, 44);
einen Antriebsabschnitt (51-54) zum Antreiben des Motors;
eine Gleichstromverbindung (60), wobei die Gleichstromverbindung einen elektrischen Speicherabschnitt (70) zum Speichern von Leistung zum Betreiben des Motors umfasst; und
einen Sperrabschnitt (65) zum Sperren eines Leistungseinspeisungspfads von dem elektrischen Speicherabschnitt (70) zu dem Antriebsabschnitt, wenn der Zustand erfasst wird, in dem mindestens einer von dem Motor und dem Antriebsabschnitt gestoppt werden muss, wobei der Zustand ein Öffnungszustand einer Sicherheitstür (90) ist oder der Zustand ein Notstoppzustand ist.

2. Spritzgießmaschine nach Anspruch 1,
wobei der Sperrabschnitt (65) den Leistungseinspeisungspfad sperrt, wenn der Zustand erfasst wird, während mindestens einer von dem Motor und dem Antriebsabschnitt in Betrieb ist.

3. Spritzgießmaschine nach Anspruch 1 oder 2,
wobei der elektrische Speicherabschnitt regenerative elektrische Leistung speichert, die bei dem Motor über den Antriebsabschnitt erzeugt wird.

4. Spritzgießmaschine nach einem der Ansprüche 1 bis 3, weiter umfassend:
einen Leistungseinspeisungsabschnitt, um Leistung in den Antriebsabschnitt einzuspeisen,
wobei der Leistungseinspeisungsabschnitt mit dem Leistungseinspeisungspfad an einer Position an einer Seite des elektrischen Speicherabschnitts relativ zu dem Sperrabschnitt (65) verbunden ist.

5. Spritzgießmaschine nach einem der Ansprüche 1 bis 3, weiter umfassend:
einen Leistungseinspeisungsabschnitt, um Leistung in den Antriebsabschnitt einzuspeisen,
wobei der Leistungseinspeisungsabschnitt mit dem Leistungseinspeisungspfad an einer Position an einer Seite des Antriebsabschnitts (51-54) relativ zu dem Sperrabschnitt verbunden ist, um Zuleitung elektrischer Leistung zu stoppen, wenn der Zustand erfasst wird.

## Revendications

1. Machine de moulage par injection (1, 2) comprenant :
un moteur (11, 24, 42, 44) ;
une section d'entraînement (51-54) pour entraîner le moteur ;
une liaison CC (60), la liaison CC comprenant une section de stockage électrique (70) pour stocker une énergie afin de faire fonctionner le moteur ; et
une section de coupure (65) pour couper une voie d'alimentation en énergie de la section de stockage électrique (70) à la section d'entraînement s'il est détecté l'état dans lequel au moins l'un parmi le moteur et la section d'entraînement a besoin d'être arrêté,
dans laquelle l'état est un état d'ouverture d'une porte de sécurité (90) ou l'état est un état d'arrêt d'urgence.

2. Machine de moulage par injection selon la revendication 1,
dans laquelle la section de coupure (65) coupe la voie d'alimentation en énergie si l'état est détecté pendant le fonctionnement d'au moins l'un parmi le moteur et la section d'entraînement.

3. Machine de moulage par injection selon la revendication 1 ou 2,
dans laquelle la section de stockage électrique stocke une énergie électrique régénérative générée au moteur via la section d'entraînement.

4. Machine de moulage par injection selon les revendications 1 à 3, comprenant en outre :
une section d'alimentation en énergie pour alimenter la section d'entraînement en énergie,
dans laquelle la section d'alimentation en énergie est reliée à la voie d'alimentation en énergie à une position sur un côté de la section de stockage électrique par rapport à la section de coupure (65).

5. Machine de moulage par injection selon les revendications 1 à 3, comprenant en outre :
une section d'alimentation en énergie pour alimenter la section d'entraînement en énergie,
dans laquelle la section d'alimentation en énergie est reliée à la voie d'alimentation en énergie à une position sur un côté de la section d'entraînement (51-54) par rapport à la section de coupure, pour arrêter l'alimentation en énergie électrique si l'état est détecté.
